# EUROPÄISCHE PATENTSCHRIFT

(11) **EP 0 550 844 B1**
(45) Veröffentlichungstag und Bekanntmachung des Hinweises auf die Patenterteilung: **22.05.1996**
(21) Anmeldenummer: 92121036.5
(22) Anmeldetag: 10.12.1992
(51) Int. Cl.: C08B 11/20, C08B 11/193

(54) **Verfahren zur Herstellung von Methyl-Hydroxyalkyl-Celluloseethern**
Process for obtaining methyl-hydroxyalkyl cellulose ethers
Procédé de préparation de méthyl-hydroxyalkyl éthers de cellulose

(30) Priorität: 23.12.1991 DE 4142761
(43) Veröffentlichungstag der Anmeldung: 14.07.1993
(73) Patentinhaber: Wolff Walsrode Aktiengesellschaft, D-29655 Walsrode (DE)
(72) Erfinder: Brauer, Oke, Dr., W-3030 Walsrode (DE); Haase, Bernd, Dr., W-3030 Walsrode (DE); Herzog, Dieter, Dr., W-3030 Walsrode (DE); Riechardt, Lutz, Dipl.-Ing., W-3030 Walsrode (DE); Sonnenberg, Gerd, Dipl.-Ing., W-3030 Walsrode (DE); Tegtmeyer, Dietrich, Dr., W-5060 Bergisch Gladbach (DE)
(74) Vertreter: Braun, Rolf, Dr.

(56) Entgegenhaltungen:
- EP-A- 0 136 518

## Beschreibung

Die Erfindung betrifft ein Verfahren zur Herstellung von Methyl-Hydroxyalkyl-Celluloseethern.

Bei der Herstellung von Methyl-Hydroxyalkyl-Celluloseethern wird der Rohstoff Cellulose mit wässriger Natronlauge alkalisiert. Die resultierende Alkalicellulose wird mit Veretherungsmitteln wie Methylchlorid, Ethylenoxid und Propylenoxid verethert. Nach erfolgter Reaktion liegen die Methyl-Hydroxyalkyl-Celluloseether in fester Form im Reaktionsgemisch vor, aus dem sie durch Filtrieren oder Zentrifugieren abgetrennt werden. Nach der Abtrennung enthalten sie Natrium-Chlorid und organische Reaktionsnebenprodukte wie Methanol und Glykole. Diese Verunreinigungen müssen durch Waschen der Methyl-Hydroxyalkyl-Celluloseether entfernt werden.

So ist bekannt (Houben-Weyl, Bd. 20 Makromolekulare Stoffe, S. 2057), daß die entsprechende Reinigung der Celluloseether, die bei höheren Temperaturen wasserunlöslich sind, durch Waschen mit heißem Wasser problemlos erreicht wird.

Weiterhin ist aber auch bekannt (Ullmanns Encyclopedia of Industrial Chemestry, Vol. 5 P 467), daß lösliche Anteile an Hemicelluloseethern oder kurzkettiger Oligomere mit dem Salz in das Waschwasser gehen. Das vermindert die Ausbeute, speziell bei niedrigviskosen Typen der Celluloseether.

In der EP-A- 136 518 wird ein Verfahren zur Reinigung von bei der Methyl-Hydroxyalkyl-Celluloseether-Herstellung anfallenden Reaktions- und Waschflüssigkeiten beschrieben, wobei die Reaktions- bzw. Waschflüssigkeit zuerst einer Destillation unterzogen wird, um leicht siedende organische Reaktionsprodukte oder nicht umgesetzte Reaktionskomponenten zu entfernen, und anschließend der destillative Rückstand einer Ultrafiltration bei einer Temperatur im Bereich von 30 bis 40°C unterzogen wird.

Es wurde nun ein Verfahren zur Gewinnung der kurzkettigen Celluloseether aus dem Waschwasser gefunden, das dadurch gekennzeichnet ist, daß man das Natriumchlorid und organische Nebenprodukte enthaltende Waschwasser bei Temperaturen von 30 bis 90°C über eine erste Stufe einer Membranfiltration der molekularen Trenngrenze 100 bis 150.000 Dalton fahrt, dabei aufkonzentriert, das so erhaltene Konzentrat im Verhältnis 1:1 bis 1:30 mit Wasser mischt, dieses mit Wasser verdünnte Konzentrat bei Temperaturen von 30 bis 95°C über eine zweite Stufe einer Membranfiltration der molekularen Trenngrenze 100 bis 150.000 Dalton gibt, erneut aufkonzentriert, und das weitgehend von Natriumchlorid und organischen Verunreinigungen befreite Konzentrat den gewaschenen Methyl-Hydroxyalkyl-Celluloseethern zusetzt, beziehungsweise die in letzterem Konzentrat enthaltenen niedrigviskosen Methyl-Hydroxylalkyl-Celluloseether als feste Substanz gewinnt.

Gegenstand der Erfindung ist ein verfahren zur Herstellung von Methyl-Hydroxyalkyl-Celluloseethern durch Alkalisierung und Veretherung von Cellulosen und Auswaschung der Methyl-Hydroxyalkyl-Celluloseether mit Wasser bei höheren Temperaturen und Gewinnung der im Waschwasser löslichen kurzkettigen Celluloseether, dadurch gekennzeichnet, daß man das Natriumchlorid und organische Nebenprodukte enthaltende Waschwasser bei Temperaturen von 30 bis 90°C über eine erste Stufe einer Membranfiltration der molekularen Trenngrenze 100 bis 150.000 Dalton fährt, dabei aufkonzentriert, das so erhaltene Konzentrat im Verhaltnis 1:1 bis 1:30 mit Wasser mischt, dieses mit Wasser verdünnte Konzentrat bei Temperaturen von 30 bis 95°C über eine zweite Stufe einer Membranfiltration mit der molekularen Trenngrenze 100 bis 150.000 Dalton gibt, erneut aufkonzentriert, und das weitgehend von Natriumchlorid und organischen Verunreinigungen befreite Konzentrat den gewaschenen Methyl-Hydroxyalkyl-Celluloseethern zusetzt, beziehungsweise die in letzterem Konzentrat enthaltenen niedrigviskosen Methyl-Hydroxyalkyl-Celluloseether als feste Substanz gewinnt.

Sowohl in der ersten wie zweiten Membranfiltration des erfindungsgemäßen Verfahrens werden Membranen der molekularen Trenngrenze von 5000 bis 15000 Dalton bevorzugt eingesetzt.

Das erfindungsgemäße Verfahren wird in der ersten Membranfiltrationsstufe bevorzugt bei Temperaturen von 35 bis 65°C und Drücken von 5 bis 20 bar durchgeführt.

In der zweiten Membranfiltrationsstufe kommen erfindungsgemäß Temperaturen von 50 bis 75°C und Drücke von 5 bis 25 bar vorzugsweise zur Anwendung.

Die Aufkonzentrierung des Waschwassers der Celluloseether in der ersten Membranfiltrationsstufe erfolgt erfindungsgemäß bevorzugt auf das 8 bis 20-fache, je nach Konzentration der niedrigviskosen Methyl-Hydroxyalkyl-Celluloseether im Waschwasser. Dabei wird bevorzugt eine Konzentratin an niedrigviskosen Methyl-Hydroxyalkyl-Celluloseethern, bestimmt als Summe Kohlehydrate, von 25 bis 50 g/l im Konzentrat eingestellt.

Erfindungsgemäß wird vorzugsweise das Verhältnis von zugegebenem Wasser zum erhaltenem Konzentrat der ersten Membranfiltrationsstufe auf 6:1 bis 10:1 eingestellt.

Das erfindungsgemäße Verfahren wird vorzugsweise in Membrananlagen durchgeführt, die aus Tubularmodulen oder Wickelmodulen aufgebaut sind.

Zur Gewinnung unterschiedlicher Produktqualitäten oder der Erhöhung der Standzeiten der Membranen kann es günstig sein, sowohl die erste wie zweite Membranstufe wiederum zu unterteilen und mit Membranen unterschiedlicher molekularer Trenngrenze zu bestücken.

Es kann bei dem erfindungsgemäßen Verfahren von Vorteil sein, das in der zweiten Membranfiltrationsstufe gewonnene Konzentrat vor dem Zusetzen zu den gewaschenen Methyl-Hydroxyalkyl-Celluloseethern aufzukonzentrieren.

Als Membranwerkstoffe kommen alle zur Verfügung stehenden organischen wie anorganischen Materialien in Betracht. Zur Theorie und zur Anwendung von Membranprozessen wird u.a. auf H. Strathmann: Chemie-Technik 7, 33 (1978), W. Pusch und A. Walch; Angew. Chemie 94, 670 (1982), K. Marquardt, Abfallwirtschaft Journal 2(1990), Nr. 4, Seite 177 ff. oder R. Rautenbach und A. Rüschl; Technische Mitteilungen, 82. Jahrgang, Heft 6, November/Dezember 1989, Seite 400 ff. verwiesen.

Als Membranelemente können alle gebräuchlichen Konstruktionsformen wie Tubular-, Wickel- oder Plattenmodule zum Einsatz kommen.

Bei den Membranfiltrationsprozessen ist Voraussetzung für ihre Anwendbarkeit, daß die zu isolierende Komponente durch eine Membran zurückgehalten wird. Aus wirtschaftlichen Erwägungen heraus muß aber auch ein ausreichender Permeatfluß gegeben sein, da aus der Größe des ermittelten Permeatflusses und der vorgegebenen auf zuarbeitende Flüssigkeitsmenge, sich die erforderliche Membranfläche ergibt, die die Investitions- wie auch die Betriebskosten einer solchen Anlage bestimmt. Der Permeatfluß steigt mit der Porengröße der Membran beziehungsweise dem in Dalton angegebenen Wert für die molekulare Trenngrenze, dem Druck und der Temperatur der zu permeierenden Flüssigkeit. Der Permeatfluß wird häufig in der spezifischen Tagesleistung l/md angegeben. Die Zunahme des Permeatflusses ist normalerweise direkt proportional dem Druck. Als Faustregel gilt, daß 10°C Temperaturerhöhung den Permeatfluß um 30 % ansteigen lassen.

Nach dem erfindungsgemäßen Verfahren können Waschwässer der Methyl-Hydroxyalkyl-Cellulose-Herstellung aufgearbeitet werden, unabhängig von der Art des eingesetzten Celluloserohstoffes. Sowohl bei Einsatz von Baumwolllinters wie Holzzellstoffen mit unterschiedlichen Anteilen an Hemicellulosen gelingt es die im Waschwasser enthaltenen Celluloseether mit einem Wirkungsgrad von über 90 % zu isolieren.

Die erwähnte Wirksamkeit der Rückgewinnung der im Waschwasser enthaltenen Celluloseether ist bei dem erfindungsgemäßen Verfahren unabhängig vom Substitutionsgrad.

Besonders vorteilhaft ist die Anwendung des erfindungsgemäßen Verfahrens beim Einsatz hoher Anteile von Holzcellulosen zur Herstellung der Methyl-Hydroxyalkyl-Celluloseether. Hier sind die im Waschwasser gelösten Anteile verwertbarer Celluloseether besonders hoch. Der gewünschte wirtschaftliche Effekt ist beträchtlich, läßt sich doch die Produktionsausbeute an Methyl-Hydroxyalkyl-Celluloseether um bis zu 3 % erhöhen.

Die Vorteile des erfindungsgemäßen Verfahrens zeigen sich im besonderen auch bei der Herstellung niedrigviskoser Methyl-Hydroxyalkyl-Celluloseether. Auch hier ist der Anteil gelöster und verwertbarer Inhaltsstoffe hoch.

Vorteilhaft bei dem erfindungsgemäßen Verfahren ist, daß die gewonnenen verwertbaren Celluloseether weitgehend frei von organischen Verunreinigungen sind, die noch Bestandteil des Waschwassers waren, vor allem Glykole und Polyglykole, aber auch niedermolekulare Oligomere werden in der zweiten Membranfiltrationsstufe mit dem zugemischten Wasser ausgetragen.

Das in der zweiten Stufe anfallende leicht salzhaltige Permeat kann in den Prozeß zurückgeführt und als Waschwasser benutzt werden, so daß es durch die erfindungsgemäße Zumischung des Wassers zu dem Konzentrat der ersten Membranstufe zu keiner Erhöhung der Abwasserbelastung wie zur Erhöhung des Wasserverbrauchs für das Gesamtverfahren kommt.

Ein weiterer bedeutender Vorteil des erfindungsgemäßen Verfahrens ist, daß die gewonnenen verwertbaren Celluloseether im zu entsorgenden Waschwasser einen biologisch schwer abbaubaren Chemischen-Sauerstoffbedarf darstellen, der als belastender Umweltfaktor wie Kostenverursacher entfällt.

Unerwartet gegenüber dem Stand der Technik ist, daß hinsichtlich des, die Wirtschaftlichkeit des Verfahrens bestimmenden Permeatflusses, die Filtrationsmembranen mit einer molekularen Trenngrenze von 5000 bis 30.000 Dalton einen gleichen und besseren Permeatfluß aufweisen, als eine Mikrofiltrationsmembran mit 0,1 µm Porenweite. Auch überraschend ist, daß es temperaturabhängige Bereiche gibt, in denen bei niedrigeren Drücken bessere Permeatflüsse erzielt werden, als bei höheren Drücken, was sich auf den Energieverbrauch und damit die Betriebskosten des erfindungsgemäßen Verfahrens günstig auswirkt.

Die nachstehenden Beispiele dienen zur Erläuterung des erfindungsgemäßen Verfahrens.

### Beispiel 1

Bei der Herstellung von Methyl-Hydroxyalkyl-Celluloseethern aus Holzzellstoffen mit einem alpha-Cellulosegehalt von 93,8 %, einem Substitutionsgrad von 1,6 und einer Viskosität von 40000 mPas gemessen in 2%iger wässriger Lösung fielen bei der Reinigung der Methyl-Hydroxyalkyl-Celluloseether 2,6 m³/h Waschwassers mit einem Gehalt an Celluloseethern, bestimmt als Summe Kohlehydrate von 4,4 g/l und Natriumchlorid von 10,3 g/l an. Das Waschwasser wurde kontinuierlich einer Ultrafiltration unterworfen. Als Membran wurde eine Polyethersulfon Tubularmembran mit einem molekularen Trennschnitt von 8000 Dalton eingesetzt.

Durchgeführt wurde die Membranfiltration bei einem Druck von 4,8 bar und 65°C. Stündlich wurden 0,26 m³ Konzentrat mit einem Gehalt an Kohlehydraten von 41,9 g/l und Natriumchlorid von 10,4 g/l entnommen. Der Permeatfluß betrug 750 l/md.

Der Konzentratmenge wurden in einer weiteren Membranfiltration kontinuierlich 1,80 m³/h Wasser zugeführt. Auch hier kam eine Polyethersulfon Tubularmembran mit einem molekularen Trennschnitt von 8000 Dalton zum Einsatz.

Die Membranfiltration wurde bei einem Druck von 5,3 bar und 65°C durchgeführt. Es wurden 0,26 m³/h Konzentrat entnommen mit einem Gehalt an Kohlehydraten von 41,7 g/l und Natriumchlorid von 0,02 g/l. Der Permeatfluß betrug 910 l/md.

Das Permeat wurde zum Waschprozeß des Methyl-Hydroxyalkyl-Celluloseethers zurückgegeben.

Das erhaltene Konzentrat wurde dem gereinigten Methyl-Hydroxyalkyl-Celluloseether zugesetzt. Der Aneil der aus dem Waschwasser gewonnenen Celluloseether beträgt 94,8 %. Der Substitutionsgrad dieser Celluloseether ist identisch mit dem Substitutionsgrad der gereinigten Methyl-Hydroxyalkyl-Celluloseether.

### Beispiel 2

Gemäß Beispiel 1 kamen als Rohstoff Baumwollinters mit einem alpha-Cellulosegehalt von 99 % zum Einsatz. Der Substitutionsgrad betrug 1,57 und die Viskosität 14200 mPas. Das Waschwasser hatte einen Gehalt an Kohlehydraten von 1,2 g/l.

Es wurden 0,13 m³/h Konzentrat mit einem Gehalt an Kohlehydraten von 23 g/l entnommen. Der Permeatfluß betrug 820 l/md.

In der zweiten Membranfiltrationsstufe wurde das Konzentrat der ersten Membranfiltrationsstufe mit 0,91 m³/h Wasser gemischt. Es wurden 0,13 m³/h Konzentrat mit einem Gehalt an Kohlehydraten von 22,5 g/l entnommen. Der Anteil der aus dem Waschwasser gewonnenen Celluloseether beträgt 93,7 %.

Der Permeatfluß betrug in der ersten Membranfiltrationsstufe 830 l/md und in der zweiten 1140 l/md.

### Beispiel 3

Gemäß Beispiel 2 betrug die Viskosität des Methyl-Hydroxyalkyl-Celluloseethers 295 mPas. Das Waschwasser hatte einen Gehalt an Kohlehydraten von 1,73 g/l.

Es wurden wie im Beispiel 2 0,13 m³/h Konzentrat entnommen. Der Gehalt an Kohlehydraten betrug 32 g/l. Der Anteil der aus dem Waschwasser gewonnenen Celluloseether beträgt 92,5 %.

Der Permeatfluß betrug in der ersten Membranfiltrationsstufe 770 l/md und in der zweiten 990 l/md.

### Beispiel 4

Gemäß Beispiel 1 wurde in der ersten Membranfiltrationsstufe der Druck von 5,3 auf 8,75 bar erhöht. Der Permeatfluß verringerte sich auf 640 l/md.

In der zweiten Membranfiltrationsstufe wurde die Temperatur auf 75°C erhöht. Der Permeatfluß stieg auf 1030 l/md an.

### Beispiel 5

Gemäß Beispiel 1 wurde in der ersten Membranfiltrationsstufe die Temperatur auf 75°C gesteigert. Der Permeatfluß verringerte sich auf 530 l/m d.

Entsprechend Beispiel 4 wurde in der zweiten Membranfiltrationsstufe der Druck auf 8,75 bar erhöht, der Permeatfluß ist mit 1010 l/md nahezu unverändert.

### Beispiel 6

Entsprechend Beispiel 1 wurde in der ersten Membranfiltrationsstufe eine Acryl-Tubularmembran mit einem molekularen Trennschnitt von 150000 Dalton eingesetzt. Unter den gleichen Bedingungen wie in Beispiel 1 betrug der Permeatfluß in der ersten Stufe 720 l/md und in der zweiten Ultrafiltrationsstufe 1260 l/md.

Der Gehalt an Kohlehydraten im Konzentrat der ersten Stufe betrug 38,4 g/l in der zweiten Stufe 37,2 g/l. Der Anteil der aus dem Waschwasser gewonnenen Celluloseether beträgt 84,5 %.

### Beispiel 7

Entsprechend Beispiel 1 wurde in der ersten Filtrationsstufe anstatt der Filtrationsmembrane mit dem molekularen Trennschnitt von 8000 Dalton eine Polyester Tubular Mikrofiltrationsmembrane mit einer Porenweite 0,1 µm eingesetzt.

Durchgeführt wurde die Mikrofiltration bei einem für die Membran zulässigen Druck von 3 bar und bei 65°C. Der Permeatfluß betrug 350 l/md.

### Beispiel 8

Entsprechend Beispiel 7 wurde in der ersten Filtrationsstufe eine keramische Tubular Mikrofiltrationsmembran mit einer Porenweite 0,1 µm eingesetzt.

Durchgeführt wurde die Mikrofiltration bei einem Druck von 8,75 bar und bei einer Temperatur von 70°C. Der Permeatfluß betrug 280 l/md.

### Beispiel 9

Entsprechend Beispiel 1 kam in der ersten und zweiten Filtrationsstufe eine Polysulfonmembran als Wickelmodul mit einem molekularen Trennschnitt von 500 Dalton zum Einsatz. Die Temperaturen betrugen in beiden Stufen 35°C und der Druck 19 bar. Bei gleicher Aufkonzentrierung und Entsalzung betrug der Permeatfluß in der ersten Stufe 140 l/m d und in der zweiten Stufe 220 l/m d.

## Patentansprüche

1. Verfahren zur Herstellung von Methyl-Hydroxyalkyl-Celluloseethern durch Alkalisierung und Veretherung von Cellulosen und Auswaschung der Methyl-Hydroxyalkyl-Celluloseether mit Wasser bei höheren Temperaturen und Gewinnung der im Waschwasser löslichen kurzkettigen Celluloseether, dadurch gekennzeichnet, daß man das Natriumchlorid und organische Nebenprodukte enthaltende Waschwasser bei Temperaturen von 30 bis 90°C über eine erste Stufe einer Membranfiltration der molekularen Trenngrenze 100 bis 150.000 Dalton fährt, dabei aufkonzentriert, das so erhaltene Konzentrat im Verhältnis 1:1 bis 1:30 mit Wasser mischt, dieses mit Wasser verdünnte Konzentrat bei Temperaturen von 30 bis 95°C über eine zweite Stufe einer Membranfiltration mit der molekularen Trenngrenze 100 bis 150.000 Dalton gibt, erneut aufkonzentriert, und das weitgehend von Natriumchlorid und organischen Verunreinigungen befreite Konzentrat den gewaschenen Methyl-Hydroxyalkyl-Celluloseethern zusetzt, beziehungsweise die in letzterem Konzentrat enthaltenen niedrigviskosen Methyl-Hydroxyalkyl-Celluloseether als feste Substanz gewinnt.

2. Verfahren nach Anspruch 1, dadurch gekennzeichnet, daß Filtrationsmembranen mit einer molekularen Trenngrenze von 5000 bis 15.000 Dalton zum Einsatz kommen.

3. Verfahren nach Anspruch 1 und 2, dadurch gekennzeichnet, daß die Temperaturen in der ersten Membranfiltrationsstufe 35 bis 65°C betragen und die Drücke zwische 5 und 25 bar liegen.

4. Verfahren nach Anspruch 1 und 2, dadurch gekennzeichnet, daß in der zweiten Membranfiltrationsstufe die Temperaturen 50 bis 75°C betragen und die Drücke zwischen 5 und 25 bar liegen.

5. Verfahren nach Anspruch 1 bis 4, dadurch gekennzeichnet, daß in der ersten Membranfiltrationsstufe auf ein Verhältnis von 1:8 bis 1:20 aufkonzentriert wird.

6. Verfahren nach Anspruch 1, dadurch gekennzeichnet, daß das Verhältnis von zugegebenem Wasser in der zweiten Membranfiltrationsstufe zur Konzentratmenge der ersten Membranfiltrationsstufe 6:1 bis 10:1 beträgt.

7. Verfahren nach Anspruch 1 bis 6, dadurch gekennzeichnet, daß als Membrananlagen Tubular- oder Wickelmodule eingesetzt sind.

8. Verfahren nach Anspruch 1 bis 7, dadurch gekennzeichnet, daß sowohl die erste wie zweite Membranfiltrationsstufe unterteilt und mit Membranen unterschiedlicher molekularer Trenngrenze bestückt sind.

9. Verfahren nach Anspruch 1 bis 8, dadurch gekennzeichnet, daß das Konzentrat der zweiten Stufe der Membranfiltration vor der Zugabe zu den gewaschenen Methyl-Hydroxyalkyl-Celluloseethern aufkonzentriert wird.

## Claims

1. Process for producing methyl-hydroxyalkyl cellulose ethers by alkalisation and etherification of celluloses and rinsing the methyl-hydroxyalkyl cellulose ethers with water at relatively high temperatures and recovering the short-chain cellulose ethers that are soluble in the wash water, characterised in that the wash water containing sodium chloride and organic by-products is passed at temperatures from 30 to 90°C across a first stage of a membrane filtration having a molecular cut-point of 100 to 150,000 Dalton, is concentrated in the process, the concentrate thereby obtained is mixed with water in a ratio from 1:1 to 1:30, this concentrate diluted with water is passed at temperatures from 30 to 95°C across a second stage of a membrane filtration having a molecular cut-point of 100 to 150,000 Dalton, and is concentrated once again, and the concentrate substantially free from sodium chloride and organic pollutants is added to the washed methyl-hydroxyalkyl cellulose ethers, or alternatively the methyl-hydroxyalkyl cellulose ethers of low viscosity that are contained in the last-named concentrate are recovered as solid substance.

2. Process according to Claim 1, characterised in that filtration membranes are used having a molecular cut-point of 5,000 to 15,000 Dalton.

3. Process according to Claims 1 and 2, characterised in that the temperatures at the first membrane-filtration stage amount to between 35 and 65°C and the pressures lie between 5 and 25 bar.

4. Process according to Claims 1 and 2, characterised in that the temperatures at the second ultrafiltration stage amount to between 50 and 75°C and the pressures lie between 5 and 25 bar.

5. Process according to Claims 1 to 4, characterised in that at the first membrane-filtration stage concentration is effected to a ratio from 1:8 to 1:20.

6. Process according to Claim 1, characterised in that the ratio of added water at the second membrane-filtration stage to the amount of concentrate from the first membrane-filtration stage amounts to between 6:1 and 10:1.

7. Process according to Claims 1 to 6, characterised in that tubular or wound modules are used by way of membrane systems.

8. Process according to Claims 1 to 7, characterised in that the first and second membrane-filtration stages are both subdivided and provided with membranes having a different molecular selection boundary.

9. Process according to Claims 1 to 8, characterised in that the concentrate from the second stage of the membrane filtration is concentrated before being added to the washed methyl-hydroxyalkyl cellulose ethers.

## Revendications

1. Procédé pour la préparation d'éthers méthyl-hydroxyalkyliques de la cellulose par alcalinisation et éthérification de la cellulose et lavage des éthers méthyl-hydroxyalkyliques de la cellulose à l'eau à haute température et isolement des éthers cellulosiques à chaîne courte solubles dans les eaux de lavage, caractérisé en ce que l'on soumet les eaux de lavage contenant le chlorure de sodium et les produits d'accompagnement organiques, dans un premier stade, à des températures de 30 à 90°C, à une filtration sur membrane ayant une limite de séparation moléculaire de 100 à 150 000 daltons, on concentre ensuite, on mélange le concentré ainsi obtenu dans un rapport de 1:1 à 1:30 avec de l'eau, on envoie ce concentré, après dilution par l'eau et à des températures de 30 à 95°C, dans un deuxième stade, à une filtration sur membrane ayant une limite de séparation moléculaire de 100 à 150 000 daltons, on concentre à nouveau et on ajoute le concentré pratiquement débarrassé du chlorure de sodium et des impuretés organiques aux éthers méthyl-hydroxyalkyliques de la cellulose lavés ou bien on isole à l'état solide les éthers méthyl-hydroxyalkyliques de la cellulose à basse viscosité contenus dans ce dernier concentré.

2. Procédé selon la revendication 1, caractérisé en ce que l'on utilise des membranes de filtration ayant une limite de séparation moléculaire de 5 000 à 15 000 daltons.

3. Procédé selon les revendications 1 et 2, caractérisé en ce que, au premier stade de filtration sur membrane, les températures sont de 35 à 65°C et les pressions de 5 à 25 bar.

4. Procédé selon les revendications 1 et 2, caractérisé en ce que, au deuxième stade de filtration sur membrane, les températures sont de 50 à 75°C et les pressions de 5 à 25 bar.

5. Procédé selon les revendications 1 à 4, caractérisé en ce que, au premier stade de filtration sur membrane, on concentre à un rapport de 1:8 à 1:20.

6. Procédé selon la revendication 1, caractérisé en ce qu'il y a un rapport de 6:1 à 10:1 entre l'eau ajoutée à la deuxième filtration sur membrane au concentré obtenu au premier stade de filtration sur membrane.

7. Procédé selon les revendications 1 à 6, caractérisé en ce que l'on utilise en tant que dispositifs à membrane des modules tubulaires ou enroulés.

8. Procédé selon les revendications 1 à 7, caractérisé en ce que l'on subdivise le premier et le deuxième stade de filtration sur membrane et on exécute les filtrations avec des membranes ayant des limites de séparation moléculaire différentes.

9. Procédé selon les revendications 1 à 8, caractérisé en ce que, avant l'addition aux éthers méthyl-hydroxyalkyliques de la cellulose lavés, le concentré du deuxième stade de filtration sur membrane est soumis à une nouvelle concentration.
